# EUROPEAN PATENT SPECIFICATION

(11) **EP 3 550 087 B1**
(45) Date of publication and mention of the grant of the patent: **01.02.2023**
(21) Application number: 17875479.2
(22) Date of filing: 24.11.2017
(51) Int. Cl.: E03F 5/04

(54) **DRAIN FOR DRAINING LIQUIDS**
ABLAUF ZUM ABLEITEN VON FLÜSSIGKEITEN
BOUCHE D'ÉCOULEMENT DE LIQUIDES

(30) Priority: 30.11.2016 ES 201631533
(43) Date of publication of application: 09.10.2019
(73) Proprietor: Jimten, S.A., 03114 Bacarot Alicante (ES)
(72) Inventor: PÉREZ SALA, Juan José, 03114 Bacarot (Alicante) (ES)
(74) Representative: Capitán García, Maria Nuria
(86) International application number: PCT/ES2017/070779
(87) International publication number: WO 2018/100220

(56) References cited:
- EP-A1- 3 006 637
- EP-A1- 3 006 637
- DE-U1- 29 821 255
- DE-U1- 29 906 821
- DE-U1-202012 001 550
- DE-U1-202013 100 171
- ES-T3- 2 404 561
- US-A- 1 873 275
- US-A1- 2008 017 562

## Description

### FIELD OF THE INVENTION

The present invention is encompassed in the field of devices used as drains in drainage systems for liquids, such as water, for example, those placed in a finished floor or wall of a wet area of a building, such as a bathroom or shower stall, etc.

### BACKGROUND OF THE INVENTION

It is known that bathrooms are generally provided with tiled walls and floors. Such tiled floors are placed slightly inclined, so that the water in these types of floors flows in the direction of a drain that collects and channels it to one of the drainage pipes of the drainage system. The drain can be located either on the floor itself or on the wall of the bathroom.

When the drains are placed in a floor or a wall, the elevation of the liquid intake to the drain is sought to be aligned with the height or level that the floor will have later when tiled. Next, a concrete base is formed, leaving part of the drain and the rest of the drainage system embedded therein, and then, the tiles or another similar type of floor and wall covering are placed. Theoretically, if the drain has been correctly aligned upon assembly, the elevation of the liquid intake to the drain will be level with the surface of the tiles once the floor is finished. However, in practice, the planned alignment of the floor may be affected during the shaping of the concrete base, or it is possible that, for example, a thicker or thinner tile may be used after the concrete base has been shaped, ultimately varying the level of the designed floor. As a result, it is usually the case that the elevation of the liquid intake to the drain is not properly aligned with the final level of the floor, which has negative implications when it comes to the water entering the drain.

An example of these known solutions that has the aforementioned disadvantages is shown in the utility model DE202012001550, which is a drain that can be installed either in a floor or in a wall. A drain body of the drain has a liquid inlet with side walls with outer edges that form inlet edges. The drain body also has a collar with a first collar part, extending approximately parallel to an inlet plane (E) conformed at the inlet edges, and a second collar part, extending approximately orthogonally to the inlet plane (E), which are arranged approximately at right angles to one another. Wherein, the side walls have a height (h) which is approximately the same as thickness of the wall and floor covering tiles. Thus, it is possible to arrange the wall covering tile or the floor covering tile flush with the inlet edges.

Another example is shown in the patent document EP3006637, which is a drain that also can be installed both as a wall drain and as a floor drain in a wet room. The drain has a receptacle with a front part, wherein the front part is the part of the drain which faces the wet room. The front part has a first front collar and a second front collar that are perpendicular to one another and form a circumferential outer edge region of the front part. A side walls protrude perpendicularly from the first front collar and the second front collar, wherein the edges of the side walls on the side facing away from the respective front collar together circumscribe a closed circumferential edge of the inlet opening. After the installation of the drain, the front collars are normally covered with a wall-covering tile and a floor-covering tile, wherein the surface of the floor-covering tile and the wall-covering tile, which is oriented towards the wet room, ends flush or almost flush with the edges of the side walls.

On the other hand, the utility model DE202013100171 provides a wall drain that requires less space in the area of the wall, or that can be installed more easily in a front wall. The wall drain comprises a drain housing that includes an upper inlet opening that gives access to the interior space of the drain housing and a discharge opening in fluid communication with the interior space, and a channel body with a fixed portion configured to be coupled to the upper inlet opening of the drain housing. The channel body has a mounting element adapted to fasten a screen to the channel body and form a water inlet opening of the drain, wherein the height of the water inlet opening can be increased or decreased, by adjusting the position of the screen, in order to adapt the water inlet opening to the thickness of the floor tiles. The mounting element adjusts the position of the screen in the vertical direction and/or in the installation depth, i.e. perpendicular to the wall wherein the drain is mounted.

For this reason, it is necessary to design an alternative solution of drain for drainage that, in a simple and economical way, allows to overcome the aforementioned disadvantage, that is, any modification of the final level of the floor resulting from its formation does not prevent the subsequent alignment of the elevation of the liquid intake to the drain with the final height or level of the tiled floor.

### DESCRIPTION OF THE INVENTION

The present invention is defined and characterized by the independent claim 1 while the dependent claims describe additional features thereof.

The object of the invention is a drain for draining liquid, for example, water.

The technical problem to be solved is how to achieve the alignment of the elevation of the liquid intake to the drain with the final height or level of the floor, irrespective of the possible modifications that said level may suffer in practice, due to the particular features of the shaping of the tiled floor.

The drain comprises a container that includes an upper inlet opening giving access to an interior space and a discharge opening in fluid communication with the interior space, as well as a mouth coupled to the upper inlet opening of the container.

Additionally, the mouth comprises a hollow movable portion that telescopically slides inside a fixed portion with an angle of 45° with respect to an elevation of the liquid intake to the drain, in such a way that the position of the movable portion is adjustable with respect to both the thickness of a floor-covering tile and to the thickness of a wall-covering tile.

Thus, the alignment of the elevation of the liquid intake to the drain can be adjusted to the final height or level of the tiled floor, simply by regulating said elevation by sliding the movable portion of the mouth with respect to its fixed portion; thus making irrelevant any modification of the floor level resulting from its shaping, either due to changes in the thickness of the formed concrete base and/or the thickness of the tiles used.

That is, depending on the final height or level of the tiled floor, the elevation of the liquid intake to the drain can be readjusted to said floor level, ensuring that all the water that flows over the floor in the direction of the drain is collected by the latter, avoiding unwanted accumulations of water at the entrance of the drain.

### BRIEF DESCRIPTION OF THE DRAWINGS

The present specification is completed by a set of figures that illustrate a preferred embodiment and in no way limit the invention.
Figure 1 represents a top perspective view of the drain for draining liquid.
Figure 2 represents a sectional side view of the drain for draining liquid of Figure 1, showing its mouth in a lowermost position.
Figure 3 represents a sectional side view of the drain for draining liquid of Figure 1, showing its mouth in an uppermost position.
Figure 4 represents a sectional side view of the drain for draining liquid of Figure 1, including a first embodiment of a trim cover, used to cover the mouth of the drain when there is a difference in thickness between the slabs that cover the floor and the wall respectively.
Figure 5 represents a sectional side view of the drain for draining liquid of Figure 1, including a second embodiment of the trim cover.
Figure 6 represents a front perspective view of the trim cover of Figures 4 and 5.
Figure 7 represents a rear perspective view of the drain for draining liquid of Figure 1.

### DETAILED DESCRIPTION OF THE INVENTION

The present invention is a drain for draining liquid, for example, water, of the type used in the drainage systems of wet areas of a building, such as a bathroom or shower stall, etc.

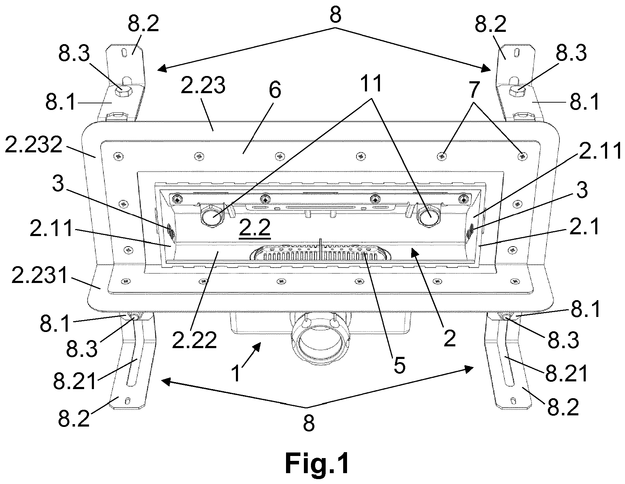

As shown in Figure 1, the drain comprises a container (1) and a mouth (2).

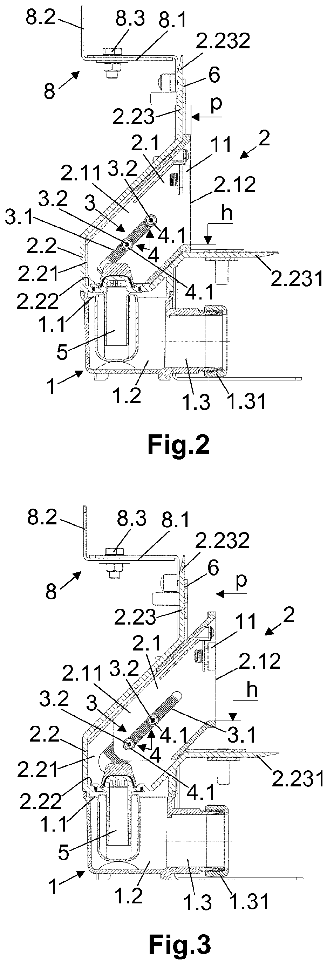

As shown in Figures 2 and 3, the container (1) in turn includes an upper inlet opening (1.1) that gives access to an interior space (1.2) and a discharge opening (1.3) in fluid communication with the interior space (1.2). The discharge opening (1.3) comprises coupling means (1.31) to the drainage pipe of the drainage system (not shown in the figures).

For its part, the mouth (2) is coupled to the upper inlet opening (1.1) of the container (1).

Additionally, the mouth (2) comprises a hollow movable portion (2.1), i.e., in the form of a "sleeve", and a fixed portion (2.2) in the form of a "cup", wherein the movable potion (2.1) telescopically slides inside the fixed portion (2.2) with an angle of 45° with respect to an elevation (h) of liquid intake to the drain, in such a way that the position of the movable portion (2.1) is adjustable with respect to both the thickness of a floor-covering tile (10) and to that of a wall-covering tile (not shown in the figures).

In other words, the position of the movable portion (2.1) defines the elevation (h) of the liquid intake to the drain, which can be regulated when assembling the drain.

The mouth (2) is coupled to the container (1) through the fixed portion (2.2), wherein a bottom (2.22) of the fixed portion (2.2) hermetically covers the upper inlet opening (1.1) of the container (1).

On the other hand, the drain may comprise a siphon (5) coupled to the bottom (2.22) of the fixed portion (2.2) in a sealed manner, leading into the interior of the container (1).

Likewise, it is preferred that sliding means (3) are arranged between respective sides (2.11, 2.21) of the movable portion (2.1) and of the fixed portion (2.2) of the mouth (2). Figure 1 shows that the use of sliding means (3) on both sides of the mouth (2) is preferred, however, this could be provided on only one of its sides.

For example, in the preferred embodiment shown in Figures 2 and 3, the sliding means (3) comprise a groove (3.1), formed on the side (2.11) of the first movable portion (2.1), and at least one guiding screw (3.2), fixed to the inside of the side (2.21) of the fixed portion (2.2), said guiding screw (3.2) being arranged passing through the groove (3.1). It is preferred that two guiding screws (3.2) are used for each groove (3.1).

On the other hand, the groove (3.1) is formed at 45° with respect to the elevation (h) of the liquid intake to the drain. Thus, at the same time, it is possible to regulate both said elevation (h) of liquid intake to the drain and the horizontal position (p) of the outer edge (2.12) of the movable portion (2.1) of the mouth (2). The inclination of the groove (3.1) at 45° is motivated by the fact that, normally, the tiles (10) used to cover the floor are the same as those used to cover the wall, therefore, when the drain is mounted on the wall, both the elevation (h) of the liquid intake with respect to the floor and the position (p) of the outer edge (2.12) of the first movable portion (2.1) with respect to the wall can be adjusted.

Likewise, it is preferred that the drain comprises locking means (4) of the position of the movable portion (2.1) with respect to the fixed portion (2.2) of the mouth (2) in order to keep the elevation (h) and the position (p) at all times aligned with the final level of the floor and the wall respectively. For example, said locking means (4) could be respective nuts (4.1) that screw onto the guiding screws (3.2) of the sliding means (3) .

On the other hand, to facilitate the mounting of the drain to the wall and the floor, it is preferred that the fixed portion (2.2) comprises an outer rim (2.23) formed by a first segment (2.231) and a second segment (2.232), respectively extended in a parallel and perpendicular manner with respect to the elevation (h) of the liquid intake to the drain. Thus, for example, the first segment (2.231) would be arranged between the concrete base (not shown in the figures) and the tiles (10) that make up the floor, while the second segment (2.232) would be arranged between the concrete or brick base and the tiles that make up the wall.

In the preferred embodiment shown in Figures 2 and 3, the elevation (h) of the liquid intake to the drain can be regulated between 4 and 22 mm with respect to the second segment (2.232) of the outer rim (2.23) of the fixed portion (2.2). Similarly, then, the position (p) of the outer edge (2.12) of the first movable portion (2.1) can be regulated between 4 and 22 mm with respect to the first segment (2.231) of the outer rim (2.23) of the fixed portion (2.2). Thus, it will be possible to assume, with a single drain, tile thicknesses of up to 18 mm.

On the other hand, it is preferred that the drain comprises a waterproofing clamp (6) fixed on the segments (2.231, 2.232) of the outer rim (2.23) of the fixed portion (2.2), forming a perimeter around the mouth (2). This guarantees the airtightness between the floor-covering tiles (10) and those covering the wall and the respective segments (2.231, 2.232), avoiding leakage of water or moisture into the floor and the wall.

Preferably, the waterproofing clamp (6) is fixed to the segments (2.231, 2.232) through mechanical fastening means, for example, screws (7).

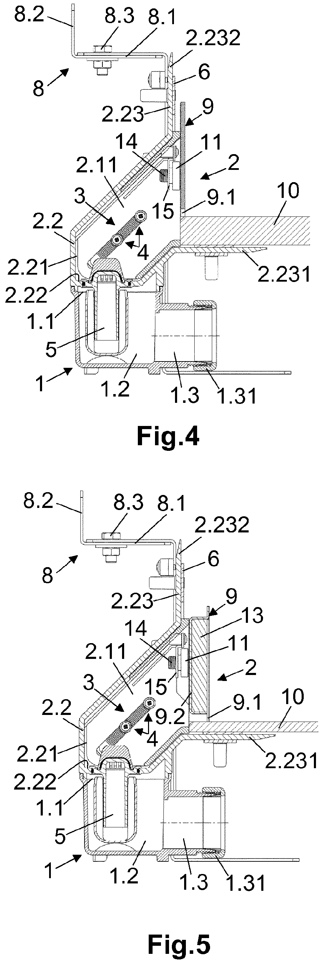

On the other hand, for when there are differences in thickness between the tiles (10) covering the floor and those covering the wall, as shown in Figures 4 and 5, the drain comprises a trim cover (9), which covers the mouth (2) in such a way as to form a liquid inlet opening (9.1) on the floor-covering tile (10).

Preferably, the trim cover (9) is fixed to the mouth (2) through magnetic coupling means, facilitating its assembly and disassembly in the mouth (2) adjusting to any thickness of floor-covering tile (10), in addition to facilitating cleaning tasks inside the drain.

The magnetic coupling means could comprise at least one magnet (11) fixed to the mouth (2), for example, inside the movable portion (2.1). Preferably, the magnet (11) is fixed to said movable portion (2.1) through means for regulating the position of said magnet (11), which can be adjusted so that said magnet (11) is in contact with the trim cover (9). For example, it could be a screw (14) that screws onto a bent plate (15) fixed to the movable portion (2.1).

For its part, the trim cover (9) could be made of a magnetic material to close the field generated by the magnet (11), and thus, remain fixed to the mouth (2); or said cover (9) can be made of a non-magnetic or magnetically weak material, on the back of which a sheet of magnetic material or magnet, for example a magnetized sheet, is fixed.

As seen in Figure 5, the trim cover (9) can incorporate a decorative part (13), for example, a piece of glass or a wall-covering tile, for example, embedded in a sheet of magnetic material or magnetized sheet (9.2) that allows to fix the trim cover (9) to the magnet (11) of the mouth (2) .

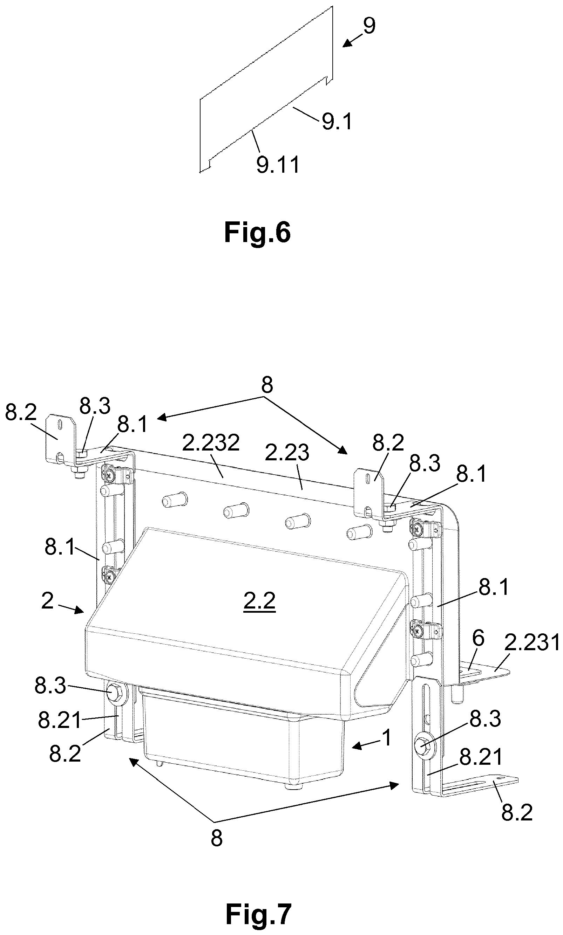

Thus, as can be seen in Figures 4 and 5, regardless of how much the floor-covering tile (10) exceeds the thickness of the wall-covering tile, the mouth (2) is covered with the trim cover (9), leaving uncovered only the portion of said mouth (2) corresponding to the liquid inlet opening (9.1). For example, as shown in Figure 6, the lower part of the trim cover (9) may comprise an inverted U-shaped recess (9.11), which, when the lower edge of the trim plate (9) rests on the tile (10), forms the liquid inlet opening (9.1) towards the inside of the drain.

Finally, as shown in Figure 7, the drain may comprise anchoring means (8) adjustable in height and depth, through which the drain is fixed, for example, to the concrete bases of both the floor and the wall.

For example, said adjustable anchoring means (8) can include a vertical central plate (8.1), fixed to the rear part of the first segment (2.231) of the outer rim (2.23) of the fixed portion (2.2), and angular plates (8.2) with longitudinal grooves (8.21), which are fixed, at one of their ends, to the corresponding ends of said central plate (8.1) by means of respective screw-nut assemblies (8.3) arranged through the corresponding longitudinal grooves (8.21), in such a way that the other ends of the angular plates (8.2) can be used to be fixed, for example, to the concrete bases of the floor and the wall respectively. Thus, thanks to the possibility of varying the relative position between the angular plates (8.2) and the central plate (8.1), and their fixing through the respective screw-nut assemblies (8.3), it is possible to adjust both the height and the depth of the drain assembly on the floor and the wall respectively.

## Claims

1. Drain for draining liquid comprising:
- a container (1) that includes an upper inlet opening (1.1) that gives access to an interior space (1.2) of the container (1) and a discharge opening (1.3) in fluid communication with the interior space (1.2), and
- a mouth (2) with a fixed portion (2.2) configured to be coupled to the upper inlet opening (1.1) of the container (1),
**characterized in that** the mouth (2) comprises a sleeve-shaped hollow movable portion (2.1) with an outer edge (2.12) through which the movable portion (2.1) defines an elevation (h) of liquid intake to the drain, the movable portion (2.1) is configured to telescopically slide inside the fixed portion (2.2) at an angle of 45° with respect to the elevation (h) of liquid intake to the drain, such that, when the drain is mounted on a wall, the elevation (h) of liquid intake to the drain can be adjusted with respect to a thickness of a floor-covering tile (10) and a position (p) of the outer edge (2.12) of the movable portion (2.1) can be adjusted with respect to a thickness of a wall-covering tile, both adjustments at the same time.

2. Drain according to claim 1, wherein sliding means (3) are arranged between respective lateral sides (2.11, 2.21) of the movable portion (2.1) and of the fixed portion (2.2) of the mouth (2).

3. Drain according to claim 2, wherein the sliding means (3) comprise a groove (3.1) and at least one guiding screw (3.2) which passes through said groove (3.1), wherein the groove (3.1) is formed on the lateral side (2.11) of the movable portion (2.1), and the guiding screw (3.2) is fixed on the lateral side (2.21) of the fixed portion (2.2).

4. Drain according to claim 3, comprising locking means (4) of the position of the movable portion (2.1) with respect to the fixed portion (2.2) of the mouth (2), wherein the locking means (4) are respective nuts (4.1) that screw onto the guiding screws (3.2) of the sliding means (3).

5. Drain according to claim 1, comprising a siphon (5) coupled in a sealed manner to a bottom (2.22) of the fixed portion (2.2), wherein the siphon (5) leads into the interior of the container (1).

6. Drain according to claim 1, wherein the fixed portion (2.2) comprises an outer rim (2.23) formed by a first segment (2.231) and a second segment (2.232), respectively extended in a parallel and perpendicular manner with respect to the elevation (h) of liquid intake to the drain defined by the movable portion (2.1) of the mouth (2).

7. Drain according to claim 6, wherein the position of the movable portion (2.1) in the fixed portion (2.2) can be adjusted to regulate the elevation (h) of the liquid intake to the drain between 4 and 22 mm with respect to the second segment (2.232) of the outer rim (2.23) of the fixed portion (2.2).

8. Drain according to claim 6, wherein the position (p) of the outer edge (2.12) of the movable portion (2.1) is between 4 and 22 mm with respect to the first segment (2.231) of the outer rim (2.23) of the fixed portion (2.2) .

9. Drain according to claim 6, comprising a waterproofing clamp (6) fixed on the segments (2.231, 2.232) of the outer rim (2.23) of the fixed portion (2.2), forming a perimeter around the movable portion (2.1) of the mouth (2).

10. Drain according to claim 1, comprising anchoring means (8) adjustable in height and depth.

11. Drain according to claim 1, comprising a trim cover (9) adapted to cover the movable portion (2.1) of the mouth (2) in use to form a liquid inlet opening (9.1) with respect to the floor-covering tile (10).

12. Drain according to claim 11, wherein the trim cover (9) is fixed to the movable portion (2.1) of the mouth (2) through magnetic coupling means.

13. Drain according to claim 12, wherein the magnetic coupling means comprise at least one magnet (11) fixed to the movable portion (2.1) of the mouth (2) through means for adjusting the position of said magnet (11).

14. Drain according to claim 12, wherein the trim cover (9) incorporates a decorative piece (13) consisting of a wall-covering tile.

## Patentansprüche

1. Ablauf zum Ableiten von Flüssigkeiten, umfassend:
- einen Behälter (1), der eine obere Einlassöffnung (1.1) einschließt, die Zugang zu einem Innenraum (1.2) des Behälters (1) gewährt, und eine Auslassöffnung (1.3), die in Fluidverbindung mit dem Innenraum (1.2) steht, und
- eine Mündung (2) mit einem feststehenden Abschnitt (2.2), der konfiguriert ist, um mit der oberen Einlassöffnung (1.1) des Behälters (1) gekoppelt zu werden,
**dadurch gekennzeichnet, dass** die Mündung (2) einen hülsenförmigen hohlen beweglichen Abschnitt (2.1) mit einer äußeren Kante (2.12) umfasst, durch die der bewegliche Abschnitt (2.1) eine Erhebung (h) des Flüssigkeitseinlassen zum dem Ablauf definiert, der bewegliche Abschnitt (2.1) so konfiguriert ist, dass er teleskopisch innerhalb des feststehenden Abschnitts (2.2) in einem Winkel von 45° in Bezug auf die Erhebung (h) des Flüssigkeitseinlasses zu dem Ablauf gleitet, sodass, wenn der Ablauf an einer Wand montiert ist, die Erhebung (h) des Flüssigkeitseinlasses zu dem Ablauf in Bezug auf eine Dicke einer Bodenbelagsfliese (10) verstellbar ist und eine Position (p) der Außenkante (2.12) des beweglichen Abschnitts (2.1) in Bezug auf eine Dicke einer Wandverkleidungsfliese verstellbar ist, wobei beide Verstellungen gleichzeitig erfolgen.

2. Ablauf nach Anspruch 1, wobei Gleitmittel (3) zwischen jeweiligen lateralen Seiten (2.11, 2.21) des beweglichen Abschnitts (2.1) und des feststehenden Abschnitts (2.2) der Mündung (2) angeordnet sind.

3. Ablauf nach Anspruch 2, wobei die Gleitmittel (3) eine Nut (3.1) und mindestens eine Führungsschraube (3.2) umfassen, die durch die Nut (3.1) verläuft, wobei die Nut (3.1) auf der lateralen Seite (2.11) des beweglichen Abschnitts (2.1) ausgebildet ist und die Führungsschraube (3.2) an der lateralen Seite (2.21) des feststehenden Abschnitts (2.2) befestigt ist.

4. Ablauf nach Anspruch 3, umfassend Verriegelungsmittel (4) der Position des beweglichen Abschnitts (2.1) in Bezug auf den feststehenden Abschnitt (2.2) der Mündung (2), wobei die Verriegelungsmittel (4) entsprechende Muttern (4.1) sind, die auf die Führungsschrauben (3.2) der Gleitmittel (3) geschraubt sind.

5. Ablauf nach Anspruch 1, umfassend einen mit einem Boden (2.22) des feststehenden Abschnitts (2.2) dichtend gekoppelten Siphon (5), wobei der Siphon (5) in das Innere des Behälters (1) führt.

6. Ablauf nach Anspruch 1, wobei der feste Abschnitt (2.2) einen äußeren Rand (2.23) umfasst, der durch ein erstes Segment (2.231) und ein zweites Segment (2.232) gebildet wird, die sich jeweils parallel und senkrecht in Bezug auf die Erhebung (h) des Flüssigkeitseinlasses zu dem Ablauf erstrecken, der durch den beweglichen Abschnitt (2.1) der Mündung (2) definiert ist.

7. Ablauf nach Anspruch 6, wobei die Position des beweglichen Abschnitts (2.1) in dem feststehenden Abschnitt (2.2) eingestellt werden kann, um die Erhebung (h) des Flüssigkeitseinlasses zu dem Ablauf zwischen 4 und 22 mm in Bezug auf das zweite Segment (2.232) des äußeren Randes (2.23) des feststehenden Abschnitts (2.2) zu regulieren.

8. Ablauf nach Anspruch 6, wobei die Position (p) der äußeren Kante (2.12) des beweglichen Abschnitts (2.1) zwischen 4 und 22 mm in Bezug auf das erste Segment (2.231) des äußeren Randes (2.23) des feststehenden Abschnitts (2.2) beträgt.

9. Ablauf nach Anspruch 6, umfassend eine wasserdichte Klemme (6), die an den Segmenten (2.231, 2.232) des äußeren Randes (2.23) des feststehenden Abschnitts (2.2) befestigt ist und einen Umfang um den beweglichen Abschnitt (2.1) der Mündung (2) bildet.

10. Ablauf nach Anspruch 1, umfassend Verankerungsmittel (8), die in Höhe und Tiefe verstellbar sind.

11. Ablauf nach Anspruch 1, umfassend eine Verkleidungsabdeckung (9), die geeignet ist, den beweglichen Abschnitt (2.1) der Mündung (2) im Gebrauch zu bedecken, um eine Flüssigkeitseinlassöffnung (9.1) in Bezug auf die Bodenbelagsfliese (10) zu bilden.

12. Ablauf nach Anspruch 11, wobei die Verkleidungsabdeckung (9) an dem beweglichen Abschnitt (2.1) der Mündung (2) durch magnetische Kopplungsmittel befestigt ist.

13. Ablauf nach Anspruch 12, wobei die magnetischen Kopplungsmittel mindestens einen Magneten (11) umfassen, der an dem beweglichen Abschnitt (2.1) der Mündung (2) durch Mittel zum Verstellen der Position des Magneten (11) befestigt ist.

14. Ablauf nach Anspruch 12, wobei die Verkleidungsabdeckung (9) ein dekoratives Teil (13) enthält, das aus einer Wandverkleidungsfliese besteht.

## Revendications

1. Vidange pour évacuation de liquide comprenant :
- un conteneur (1) qui comprend une ouverture d'entrée supérieure (1.1) qui donne accès à un espace intérieur (1.2) du conteneur (1) et une ouverture de décharge (1.3) en communication fluidique avec l'espace intérieur (1.2), et
- une embouchure (2) avec une partie fixe (2.2) configurée pour être couplée à l'ouverture d'entrée supérieure (1.1) du conteneur (1),
**caractérisé en ce que** l'embouchure (2) comprend une partie mobile creuse en forme de manchon (2.1) avec un bord externe (2.12) à travers lequel la partie mobile (2.1) définit une élévation (h) d'admission de liquide vers le drain, la partie mobile (2.1) est configuré pour coulisser de manière télescopique à l'intérieur de la partie fixe (2.2) à un angle de 45 ° par rapport à l'élévation (h) d'admission de liquide au drain, de sorte que, lorsque le drain est monté sur un mur, l'élévation (h) d'admission de liquide vers le drain peut être ajustée par rapport à une épaisseur d'une dalle de revêtement de sol (10) et une position (p) du bord externe (2.12) de la partie mobile (2.1) peut être ajustée avec par rapport à une épaisseur d'une dalle de revêtement mural, les deux réglages en même temps.

2. Drain selon la revendication 1, dans lequel des moyens de coulissement (3) sont agencés entre des côtés latéraux respectifs (2.11, 2.21) de la partie mobile (2.1) et de la partie fixe (2.2) de l'embouchure (2).

3. Drain selon la revendication 2, dans lequel les moyens de coulissement (3) comprennent une rainure (3.1) et au moins une vis de guidage (3.2) qui traverse ladite rainure (3.1), dans lequel la rainure (3.1) est formée sur le côté latéral (2.11) de la partie mobile (2.1), et la vis de guidage (3.2) est fixée sur le côté latéral (2.21) de la partie fixe (2.2).

4. Drain selon la revendication 3, comprenant des moyens de blocage (4) de la position de la partie mobile (2.1) par rapport à la partie fixe (2.2) de l'embouchure (2), dans lequel les moyens de blocage (4) sont des écrous respectifs (4.1) qui se vissent sur les vis de guidage (3.2) des moyens de coulissement (3).

5. Vidange selon la revendication 1, comprenant un siphon (5) accouplé de manière étanche à un fond (2.22) de la partie fixe (2.2), dans lequel le siphon (5) débouche à l'intérieur du conteneur (1).

6. Drain selon la revendication 1, dans lequel la partie fixe (2.2) comporte un rebord externe (2.23) formé par un premier segment (2.231) et un deuxième segment (2.232), respectivement prolongés de manière parallèle et perpendiculaire par rapport à l'élévation (h) d'arrivée de liquide au drain défini par la partie mobile (2.1) de l'embouchure (2).

7. Drain selon la revendication 6, dans lequel la position de la partie mobile (2.1) dans la partie fixe (2.2) peut être ajustée pour régler l'élévation (h) de l'arrivée de liquide au drain entre 4 et 22 mm par rapport à la deuxième segment (2.232) du rebord externe (2.23) de la partie fixe (2.2).

8. Drain selon la revendication 6, dans lequel la position (p) du bord externe (2.12) de la partie mobile (2.1) est comprise entre 4 et 22 mm par rapport au premier segment (2.231) du rebord externe (2.23) de la partie fixe (2.2).

9. Drain selon la revendication 6, comprenant une pince d'étanchéité (6) fixée sur les segments (2.231, 2.232) du rebord externe (2.23) de la partie fixe (2.2), formant un périmètre autour de la partie mobile (2.1) de l'embouchure (2).

10. Drain selon la revendication 1, comprenant des moyens d'ancrage (8) réglables en hauteur et en profondeur.

11. Drain selon la revendication 1, comprenant un couvercle d'habillage (9) apte à recouvrir la partie mobile (2.1) de l'embouchure (2) en utilisation pour former une ouverture d'entrée de liquide (9.1) par rapport à la dalle de revêtement de sol (10).

12. Drain selon la revendication 11, dans lequel le couvercle d'habillage (9) est fixé à la partie mobile (2.1) de l'embouchure (2) par l'intermédiaire de moyens de couplage magnétique.

13. Drain selon la revendication 12, dans lequel les moyens de couplage magnétique comprennent au moins un aimant (11) fixé à la partie mobile (2.1) de l'embouchure (2) par l'intermédiaire de moyens de réglage de la position dudit aimant (11).

14. Caniveau selon la revendication 12, dans lequel le couvercle d'habillage (9) intègre une pièce décorative (13) constituée d'une dalle de revêtement mural.
